# EUROPEAN PATENT SPECIFICATION

(11) **EP 3 827 954 B1**
(45) Date of publication and mention of the grant of the patent: **17.08.2022**
(21) Application number: 20210204.2
(22) Date of filing: 27.11.2020
(51) Int. Cl.: B29B 7/42, B29C 45/78, B29C 45/74, B29C 45/62, B29C 45/46, B22F 12/00, B22F 10/00, B33Y 70/00, B33Y 40/10, B33Y 30/00, B29C 64/314, B29C 64/295, B29C 64/241, B29C 64/209, B29C 64/118, B29C 64/20, B29C 64/10

(54) **PLASTICIZING DEVICE FOR A THREE-DIMENSIONAL SHAPING APPARATUS**
PLASTIFIZIERUNGSVORRICHTUNG FÜR EINE VORRICHTUNG ZUR DREIDIMENSIONALEN FORMUNG
DISPOSITIF DE PLASTIFICATION POUR APPAREIL DE MISE EN FORME TRIDIMENSIONNELLE

(30) Priority: 29.11.2019 JP 2019215969
(43) Date of publication of application: 02.06.2021
(73) Proprietor: Seiko Epson Corporation, Tokyo 160-8801 (JP)
(72) Inventor: ANEGAWA, Kenta, Suwa-shi, Nagano 392-8502 (JP)
(74) Representative: Miller Sturt Kenyon

(56) References cited:
- EP-A1- 1 733 863
- JP-A- S61 235 120
- US-A- 6 146 575

## Description

The present application is based on, and claims priority from JP Application Serial Number 2019-215969, filed on November 29, 2019.

### BACKGROUND

### 1. Technical Field

The present disclosure relates to a plasticizing device.

### 2. Related Art

In JP-A-2009-269182 (Patent Document 1), with respect to a plasticizing and feeding-out device that plasticizes a material and feeds out the resultant as a molding material, a device including a rotor with a spiral groove formed therein and a barrel that abuts an end face of the rotor and has a communication hole at the center is disclosed. Further plasticizing devices are described in EP 1 733 863 which discloses the preamble of claim 1 and US 6 146 575.

When a material in a pellet form is plasticized using the above-mentioned device, by keeping the fluidity of the material in an outer circumferential portion of the rotor lower than the fluidity of the material in a central portion of the rotor, a conveyance force for conveying the material toward the center of the rotor is obtained. The plasticized material in the central portion of the rotor is fed out from the communication hole by this conveyance force, and therefore, if the fluidity of the material in the outer circumferential portion of the rotor cannot be kept low, the feed-out amount of the molding material may become unstable.

### SUMMARY

The plasticizing device according to the claimed invention is defined in the independent claim 1.

### BRIEF DESCRIPTION OF THE DRAWINGS

FIG. 1 is an explanatory view showing a schematic configuration of a three-dimensional shaping apparatus in a first embodiment.
FIG. 2 is a schematic perspective view showing a configuration at a lower face side of a rotor.
FIG. 3 is a schematic plan view showing a configuration at a rotor opposed face side of a barrel.
FIG. 4 is a IV-IV cross-sectional view of the barrel in FIG. 1.
FIG. 5 is a cross-sectional view of a barrel in a second embodiment.
FIG. 6 is an explanatory view showing a schematic configuration of a three-dimensional shaping apparatus in a third embodiment.
FIG. 7 is an explanatory view showing a schematic configuration of a three-dimensional shaping apparatus in a fourth embodiment.
FIG. 8 is a schematic perspective view showing a configuration at a lower face side of a barrel in the fourth embodiment.
FIG. 9 is an explanatory view showing a schematic configuration of an injection molding apparatus as a fifth embodiment.

### DESCRIPTION OF EXEMPLARY EMBODIMENTS

### A. First Embodiment

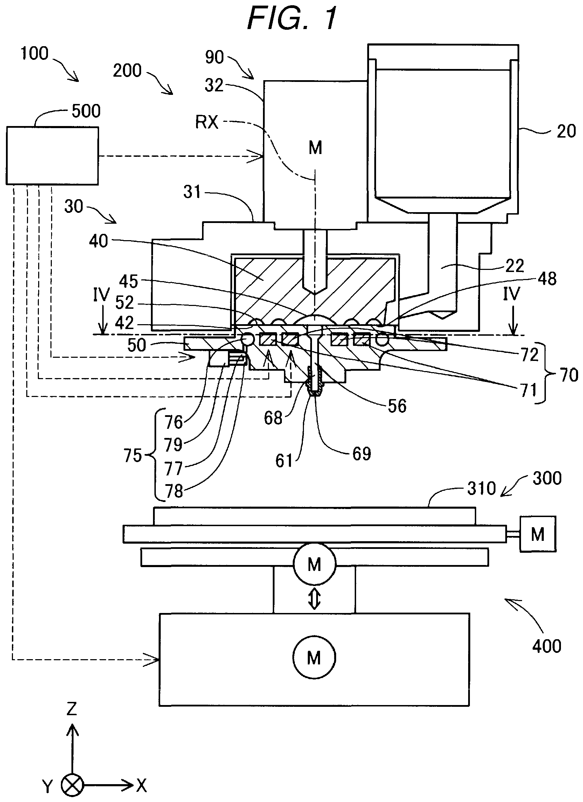

FIG. 1 is an explanatory view showing a schematic configuration of a three-dimensional shaping apparatus 100. In FIG. 1, arrows along X, Y, and Z directions orthogonal to one another are shown. The X, Y, and Z directions are directions along an X axis, a Y axis, and a Z axis that are three spatial axes orthogonal to one another, and each includes both of one side direction along the X, Y, or Z direction, and a direction opposite thereto. The X axis and the Y axis are axes along the horizontal face, and the Z axis is an axis along a vertical line. In also the other drawings, arrows along the X, Y, and Z directions are shown as appropriate. The X, Y, and Z directions in FIG. 1 and the X, Y, and Z directions in the other drawings indicate the same directions.

The three-dimensional shaping apparatus 100 includes a shaping unit 200, a stage 300, a moving mechanism 400, and a control unit 500. The shaping unit 200 is constituted by a material supply portion 20, a plasticizing device 90, and a nozzle 61. In the three-dimensional shaping apparatus 100, a material supplied from the material supply portion 20 is plasticized by the plasticizing device 90 under the control of the control unit 500, whereby a shaping material is formed. The three-dimensional shaping apparatus 100 shapes a three-dimensional shaped article in which the shaping material is laminated on a shaping face 310 by changing a relative position of the nozzle 61 and the shaping face 310 by the moving mechanism 400 while ejecting the formed shaping material toward the shaping face 310 on the stage 300 from the nozzle 61. A detailed configuration of the shaping unit 200 will be described later.

As described above, the moving mechanism 400 changes the relative position of the nozzle 61 and the shaping face 310. In this embodiment, the moving mechanism 400 supports the stage 300 and changes the relative position of the nozzle 61 and the shaping face 310 by moving the stage 300 with respect to the shaping unit 200. The change of the relative position of the nozzle 61 with respect to the shaping face 310 is sometimes referred to as "movement of the nozzle 61".

The moving mechanism 400 in this embodiment is constituted by a three-axis positioner for moving the stage 300 in three axis directions of the X, Y, and Z directions by driving forces of three motors. Each motor drives under the control of the control unit 500. The moving mechanism 400 may be configured to change the relative position of the nozzle 61 and the shaping face 310 by moving the shaping unit 200 without moving the stage 300. Further, the moving mechanism 400 may be configured to change the relative position of the nozzle 61 and the shaping face 310 by moving both the stage 300 and the shaping unit 200.

The control unit 500 is constituted as a computer and includes at least one processor, a memory, and an input/output interface for performing signal input/output to/from the outside. The processor realizes a shaping process for shaping a three-dimensional shaped article by executing a predetermined program stored in the memory. In the shaping process, the control unit 500 appropriately controls the shaping unit 200 and the moving mechanism 400. The function of the control unit 500 may be partially or entirely realized by a circuit.

The material supply portion 20 stores a material in a pellet form for forming a shaping material. The material supply portion 20 is constituted by, for example, a hopper that stores the material. The material supply portion 20 supplies the material stored therein to the plasticizing device 90 through a communication path 22. In this embodiment, in the material supply portion 20, a material obtained by molding an ABS resin that is an amorphous resin into a pellet form is stored. The details of the material will be described later.

The plasticizing device 90 includes a drive motor 32, a rotor 40, and a barrel 50. The plasticizing device 90 melts at least a part of the material in a solid state supplied from the material supply portion 20 to form a shaping material in a paste form having fluidity, and supplies the formed shaping material to the nozzle 61. Note that the "melting" not only means that a material having thermoplasticity is transformed into a liquid by being heated to a temperature equal to or higher than the melting point, but also means the "plasticization" that a material having thermoplasticity is softened by being heated to a temperature equal to or higher than the glass transition point so as to exhibit fluidity. The rotor 40 of this embodiment is also referred to as "flat screw" or "scroll". Further, the barrel 50 is also referred to as "screw facing portion". In addition, the shaping material is sometimes referred to as "molten material" or "molding material".

The rotor 40 has a substantially columnar shape whose height along its central axis RX is smaller than the diameter. In this embodiment, the rotor 40 is disposed so that the central axis RX becomes parallel to the Z direction.

The rotor 40 is housed in a rotor case 31. An upper face side of the rotor 40 is coupled to the drive motor 32, and the rotor 40 rotates around the central axis RX in the rotor case 31 by a rotational driving force generated by the drive motor 32. The drive motor 32 drives under the control of the control unit 500.

In a groove formed face 48 that is a lower face of the rotor 40, a groove 42 is formed. In this embodiment, the groove 42 is a groove along the rotation direction of the rotor 40. The above-mentioned communication path 22 of the material supply portion 20 communicates with the groove 42 from a side face of the rotor 40.

The barrel 50 is opposed to the groove formed face 48 of the rotor 40. Specifically, a rotor opposed face 52 that is an upper face of the barrel 50 and the groove formed face 48 are opposed to each other. A space is formed between the groove 42 of the groove formed face 48 and the rotor opposed face 52. In this space, the material is supplied from the material supply portion 20. Specific configurations of the rotor 40 and the groove 42 will be described later.

In this embodiment, the barrel 50 is provided with a heating portion 70 and a cooling portion 75. The heating portion 70 has a first heating portion 71 and a second heating portion 72, and is provided below the rotor opposed face 52. The heating portion 70 heats the material supplied between the groove 42 and the barrel 50. The cooling portion 75 has a refrigerant flow path 76, an inlet portion 77 for introducing a refrigerant inside the refrigerant flow path 76, an outlet portion 78 that communicates with the refrigerant flow path 76 and discharges the refrigerant outside the refrigerant flow path 76, and a refrigerant circulation device 79. The details of the heating portion 70 and the cooling portion 75 will be described later.

The material supplied to the groove 42 of the rotor 40 flows along the groove 42 by the rotation of the rotor 40 while being melted in the groove 42, and is guided to a central portion 45 of the rotor 40 as the shaping material. The shaping material in a paste form flowing in the central portion 45 is supplied to the nozzle 61 through a communication hole 56 provided at the center of the barrel 50.

The nozzle 61 is provided at a lower part of the barrel 50. The nozzle 61 has a nozzle flow path 68 and an ejection port 69. The nozzle flow path 68 is a flow path provided in the nozzle 61, and one end thereof is coupled to the communication hole 56 in the barrel 50. The ejection port 69 is a portion with a reduced flow path cross section provided at an end portion which is not coupled to the communication hole 56 of the nozzle flow path 68. The shaping material flows in the nozzle flow path 68 from the communication hole 56 and is ejected from the ejection port 69. In this embodiment, an opening shape of the ejection port 69 is a circular shape. The opening shape of the ejection port 69 is not limited to a circular shape, and may be, for example, a square shape or a polygonal shape other than the square shape.

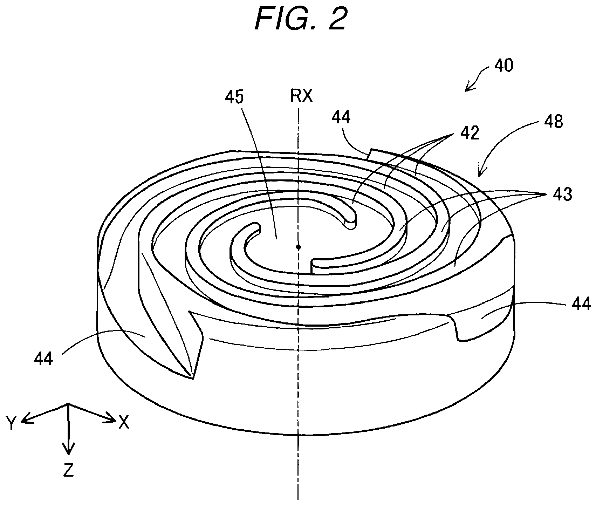

FIG. 2 is a schematic perspective view showing a configuration at a lower face side of the rotor 40. In FIG. 2, the position of the central axis RX of the rotor 40 is indicated by an alternate long and short dash line.

The central portion 45 of the groove formed face 48 of the rotor 40 is configured as a recess portion to which one end of the groove 42 is coupled. The central portion 45 is opposed to the communication hole 56 of the barrel 50. In this embodiment, the central portion 45 crosses the central axis RX.

The groove 42 of the rotor 40 constitutes a so-called scroll groove. The groove 42 extends in a spiral shape so as to draw an arc toward the outer circumference of the rotor 40 from the central portion 45. The groove 42 may be, for example, configured to extend in an involute curve shape or in a helical shape. In the groove formed face 48, a projected streak portion 43 that constitutes a side wall portion of the groove 42 and extends along each groove 42 is provided.

The groove 42 is continuous up to a material inflow port 44 formed at a side face of the rotor 40. The material inflow port 44 is a portion for receiving the material supplied through the communication path 22 of the material supply portion 20.

In FIG. 2, an example of the rotor 40 having three grooves 42 and three projected streak portions 43 is shown. The number of grooves 42 or projected streak portions 43 provided in the rotor 40 is not limited to three. In the rotor 40, only one groove 42 may be provided, or two or more of a plurality of grooves 42 may be provided. Further, an arbitrary number of projected streak portions 43 may be provided in accordance with the number of grooves 42.

In FIG. 2, an example of the rotor 40 in which the material inflow port 44 is formed at three sites is shown. The number of material inflow ports 44 provided in the rotor 40 is not limited to three. In the rotor 40, the material inflow port 44 may be provided at only one site, or may be provided at two or more of a plurality of sites.

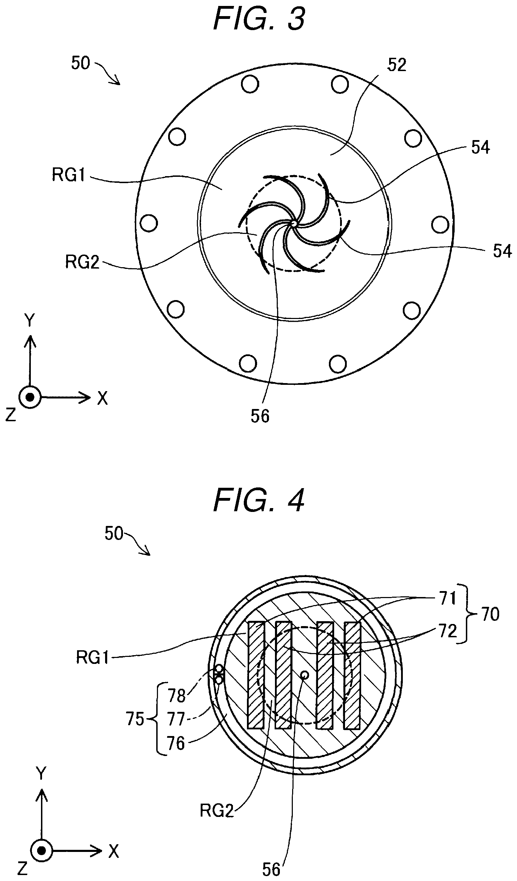

FIG. 3 is a schematic plan view showing a configuration at the rotor opposed face 52 side of the barrel 50. At the center of the rotor opposed face 52, the communication hole 56 for supplying the shaping material to the nozzle 61 is formed. In the rotor opposed face 52, a plurality of guide grooves 54, each of which is coupled to the communication hole 56 and extends in a spiral shape toward the outer circumference from the communication hole 56 are formed. The plurality of guide grooves 54 have a function of guiding the shaping material flowing in the central portion 45 of the rotor 40 to the communication hole 56. In order to allow the shaping material to efficiently reach the communication hole 56, it is preferred that the guide grooves 54 are formed in the barrel 50, but the guide grooves 54 need not be formed.

As shown in FIG. 3, the barrel 50 has a first region RG1 and a second region RG2. The second region RG2 indicates a region that is closer to the communication hole 56 than the first region RG1. In FIG. 3, a region outside a broken line and inside an outer edge of the rotor opposed face 52 of the barrel 50 is the first region RG1, and a region inside the broken line is the second region RG2. That is, the broken line in FIG. 3 indicates the boundary between the first region RG1 and the second region RG2. In this embodiment, a region inside a circle having a radius that is half the radius of the rotor opposed face 52 is the second region RG2, and a region outside the circle is the first region RG1. The position of the boundary is not limited to one described above, and may be another position as long as it is a position at which the second region RG2 becomes a region that is closer to the communication hole 56 than the first region RG1.

When the material is supplied to the material inflow port 44 of the rotor 40, the material is guided to the groove 42 and moves toward the central portion 45 while being heated in the groove 42. As the material approaches the central portion 45, the material is melted so as to increase the fluidity, and is converted into the shaping material. The shaping material collected in the central portion 45 flows out to the nozzle 61 from the communication hole 56 by an internal pressure generated in the central portion 45.

FIG. 4 is a IV-IV cross-sectional view of the barrel 50 in FIG. 1. In FIG. 4, the communication hole 56, the heating portion 70, and the cooling portion 75 are shown. Further, in FIG. 4, the first region RG1 and the second region RG2 described above are illustrated.

As described above, the heating portion 70 has the first heating portion 71 and the second heating portion 72. The second heating portion 72 is disposed closer to the communication hole 56 than the first heating portion 71. Specifically, the shortest distance between the second heating portion 72 and the center of the communication hole 56 in a direction along the XY plane crossing the communication hole 56 is shorter than the shortest distance between the first heating portion 71 and the center of the communication hole 56.

In this embodiment, as the first heating portion 71, a pair of heaters is disposed across the communication hole 56, and as the second heating portion 72, a pair of heaters is disposed across the communication hole 56 aside from the first heating portion 71. In this embodiment, as the first heating portion 71 and the second heating portion 72, rod-shaped heaters are disposed. That is, each of the first heating portion 71 and the second heating portion 72 has two rod-shaped heaters. Each heater is disposed such that the longitudinal direction is parallel to the Y direction, and has substantially the same length. The first heating portion 71 and the second heating portion 72 are individually controlled by the control unit 500.

In FIG. 4, in the cooling portion 75, the refrigerant flow path 76, the inlet portion 77, and the outlet portion 78 are shown. The refrigerant flow path 76 is disposed along a circumferential direction of the barrel 50 farther from the communication hole 56 than the first heating portion 71. Specifically, the shortest distance between the refrigerant flow path 76 and the center of the communication hole 56 in the direction along the XY plane crossing the communication hole 56 is farther than the shortest distance between the first heating portion 71 and the center of the communication hole 56. In this embodiment, the refrigerant flow path 76 along the circumferential direction of the barrel 50 is disposed between the first heating portion 71 and the outer edge of the rotor opposed face 52 in the direction along the XY plane crossing the communication hole 56.

Into the refrigerant flow path 76, a refrigerant is introduced from the inlet portion 77. The refrigerant introduced from the inlet portion 77 flows in the refrigerant flow path 76 and is discharged outside from the outlet portion 78. In this embodiment, as shown in FIG. 1, to the inlet portion 77 and the outlet portion 78, the refrigerant circulation device 79 is coupled. The refrigerant circulation device 79 includes a pump and circulates the refrigerant from the outlet portion 78 to the inlet portion 77. The refrigerant circulation device 79 is controlled by the control unit 500.

The control unit 500 controls the first heating portion 71 and the second heating portion 72 so that the temperature of the second region RG2 is higher than the temperature of the first region RG1. Further, in this embodiment, the control unit 500 controls the first heating portion 71 and the second heating portion 72 and also controls the refrigerant circulation device 79 so as to circulate the refrigerant in the refrigerant flow path 76. According to this, in the barrel 50, a portion farther from the communication hole 56 than the first heating portion 71 is cooled by the refrigerant. That is, as compared with a case where the refrigerant flow path 76 is not provided, the temperature of an outer circumferential portion of the barrel 50 can be kept lower. By controlling the heating portion 70 and the cooling portion 75 in this manner, the fluidity of the material in the first region RG1 is kept lower than the fluidity of the material in the second region RG2. That is, in the outer circumferential portion of the barrel 50, the fluidity of the material is kept low.

In this embodiment, the control unit 500 controls the heating portion 70 so as to adjust the temperature of the first region RG1 to a temperature lower than the glass transition temperature Tg of the ABS resin that is the material and adjust the temperature of the second region RG2 to a temperature equal to or higher than the glass transition temperature Tg. In this embodiment, specifically, the glass transition temperature of the ABS resin material is 111°C, and the temperature of the first heating portion 71 is controlled to 210°C, and the temperature of the second heating portion 72 is controlled to 60°C. Further, the control unit 500 controls the refrigerant circulation device 79 so that the temperature of the refrigerant in each of the inlet portion 77 and the outlet portion 78 of the refrigerant flow path 76 is 15°C. As described above, the ABS resin is an amorphous resin, and therefore, by controlling the temperatures of the first region RG1 and the second region RG2 based on the glass transition temperature Tg, the fluidity of the material in each region can be appropriately controlled. Note that the glass transition temperature is sometimes referred to as "glass transition point".

According to the plasticizing device 90 of this embodiment described above, the control unit 500 individually controls the first heating portion 71 and the second heating portion 72 disposed closer to the communication hole 56 than the first heating portion 71 so that the temperature of the second region RG2 that is closer to the communication hole 56 than the first region RG1 is higher than the temperature of the first region RG1. According to this, the fluidity of the material in the first region RG1 is kept lower than the fluidity of the material in the second region RG2. Therefore, the feed-out amount of the shaping material to be fed out from the communication hole 56 becomes stable.

Further, in this embodiment, the first heating portion 71 and the second heating portion 72 are provided in the barrel 50. Therefore, as compared with a case where the first heating portion 71 and the second heating portion 72 are provided in the rotor 40 that rotates, the feed-out amount of the shaping material can be stabilized with a simple configuration.

Further, in this embodiment, as the first heating portion 71, a pair of heating portions is disposed across the communication hole 56, and as the second heating portion 72, a pair of heating portions is disposed across the communication hole 56. According to this, the barrel 50 can be heated symmetrically across the communication hole 56 by the first heating portion 71 and the second heating portion 72. Therefore, the temperature of the second region RG2 can be made higher than the temperature of the first region RG1 by simple control.

Further, in this embodiment, the plasticizing device 90 has the refrigerant flow path 76, the inlet portion 77, and the outlet portion 78 provided along the circumferential direction of the barrel 50 farther from the communication hole 56 than the first heating portion 71. Therefore, by allowing the refrigerant to flow in the refrigerant flow path 76, the fluidity of the material can be kept lower in the outer circumferential portion of the barrel 50.

Further, in this embodiment, the control unit 500 controls the heating portion 70 so as to adjust the temperature of the first region RG1 to a temperature lower than the glass transition temperature Tg of the ABS resin material that is an amorphous resin and adjust the temperature of the second region RG2 to a temperature equal to or higher than the glass transition temperature Tg. Therefore, when an amorphous resin is used as the material, the fluidity of the material in the first region RG1 can be more effectively kept low, and the fluidity of the material in the second region RG2 can be more effectively increased.

Here, the material of a three-dimensional shaped article to be used in the three-dimensional shaping apparatus 100 described above will be described. In the three-dimensional shaping apparatus 100, for example, a three-dimensional shaped article can be shaped using, as a main material, any of various materials such as a material having thermoplasticity, a metal material, and a ceramic material. Here, the "main material" means a principal material for forming the shape of the three-dimensional shaped article and refers to a material whose content ratio is 50 wt% or more in the three-dimensional shaped article. In the above-mentioned shaping material, a material obtained by melting such a main material singly, or a material formed into a paste by melting a part of the components contained together with the main material is included.

When a material having thermoplasticity is used as the main material, the shaping material is formed by plasticizing the material in the plasticizing device 90.

As the material having thermoplasticity, for example, a material obtained by molding the following thermoplastic resin material into a pellet form can be used.

### Examples of Thermoplastic Resin Material

general-purpose engineering plastics such as a polypropylene resin (PP), a polyethylene resin (PE), a polyacetal resin (POM), a polyvinyl chloride resin (PVC), a polyamide resin (PA), an acrylonitrile-butadiene-styrene resin (ABS), a polylactic acid resin (PLA), a polyphenylene sulfide resin (PPS), polyether ether ketone (PEEK), polycarbonate (PC), modified polyphenylene ether, polybutylene terephthalate, and polyethylene terephthalate, and engineering plastics such as polysulfone, polyethersulfone, polyphenylene sulfide, polyarylate, polyimide, polyamideimide, polyetherimide, and polyether ether ketone

In the material having thermoplasticity, a pigment, a metal, a ceramic, or other than these, an additive such as a wax, a flame retardant, an antioxidant, or a heat stabilizer, or the like may be mixed. In that case, a material obtained by mixing the above-mentioned thermoplastic resin material with the additive or the like and molding the mixture into a pellet form can be used as the material having thermoplasticity. The material having thermoplasticity is converted into a plasticized and molten state by the rotation of the rotor 40 and the heating by the heating portion 70 in the plasticizing device 90. It is desirable that the material having thermoplasticity is injected from the nozzle 61 in a state of being completely melted by heating to a temperature equal to or higher than the glass transition point thereof. The shaping material formed by melting the material having thermoplasticity is cured by decreasing the temperature after being ejected from the nozzle 61. In order to eject the material in a completely melted state, a heater may be provided around the nozzle 61.

In the three-dimensional shaping apparatus 100, in place of the above-mentioned material having thermoplasticity, for example, the following metal material may be used as the main material. In that case, it is desirable that a powder material obtained by powdering the following metal material and a component that melts when forming the shaping material are mixed and molded into a pellet form, and the resulting material is put in the plasticizing device 90.

### Examples of Metal Material

single metals of magnesium (Mg), iron (Fe), cobalt (Co), chromium (Cr), aluminum (Al), titanium (Ti), copper (Cu), and nickel (Ni), or alloys containing one or more of these metals

### Examples of the above Alloy

a maraging steel, a stainless steel, cobalt-chromium-molybdenum, a titanium alloy, a nickel alloy, an aluminum alloy, a cobalt alloy, and a cobalt-chromium alloy

In the three-dimensional shaping apparatus 100, in place of the above-mentioned metal material, a ceramic material can be used as the main material. As the ceramic material, for example, an oxide ceramic such as silicon dioxide, titanium dioxide, aluminum oxide, or zirconium oxide, a non-oxide ceramic such as aluminum nitride, or the like can be used. When a metal material or a ceramic material as described above is used as the main material, the shaping material ejected in the shaping face 310 may be cured by sintering.

The metal material or the ceramic material to be put in the material supply portion 20 as the material may be a mixed material obtained by mixing multiple types of single metal powders or alloy powders or ceramic material powders and molding the mixture into a pellet form. Further, the powder material of the metal material or the ceramic material may be coated with, for example, a thermoplastic resin as exemplified above or a thermoplastic resin other than these. In that case, the material may be configured to exhibit fluidity by melting the thermoplastic resin in the plasticizing device 90.

It is also possible to use a material obtained by adding, for example, a solvent as described below to the metal material or the ceramic material and shaping the resultant into a pellet form. As the solvent, one type or a combination of two or more types selected from the following solvents can be used.

### Examples of Solvent

water; (poly)alkylene glycol monoalkyl ethers such as ethylene glycol monomethyl ether, ethylene glycol monoethyl ether, propylene glycol monomethyl ether, and propylene glycol monoethyl ether; acetate esters such as ethyl acetate, n-propyl acetate, iso-propyl acetate, n-butyl acetate, and iso-butyl acetate; aromatic hydrocarbons such as benzene, toluene, and xylene, ketones such as methyl ethyl ketone, acetone, methyl isobutyl ketone, ethyl n-butyl ketone, diisopropyl ketone, and acetyl acetone; alcohols such as ethanol, propanol, and butanol; tetra-alkyl ammonium acetates; sulfoxide-based solvents such as dimethyl sulfoxide and diethyl sulfoxide; pyridine-based solvents such as pyridine, γ-picoline, and 2,6-lutidine; tetra-alkyl ammonium acetates (for example, tetra-butyl ammonium acetate, etc.); ionic liquids such as butyl carbitol acetate, and the like

In addition thereto, it is also possible to use a material obtained by adding, for example, a binder as described below to the metal material or the ceramic material and shaping the resultant into a pellet form.

### Examples of Binder

an acrylic resin, an epoxy resin, a silicone resin, a cellulosic resin, or another synthetic resin, or PLA (polylactic acid), PA (polyamide), PPS (polyphenylene sulfide), PEEK (polyether ether ketone), or other thermoplastic resins

### B. Second Embodiment

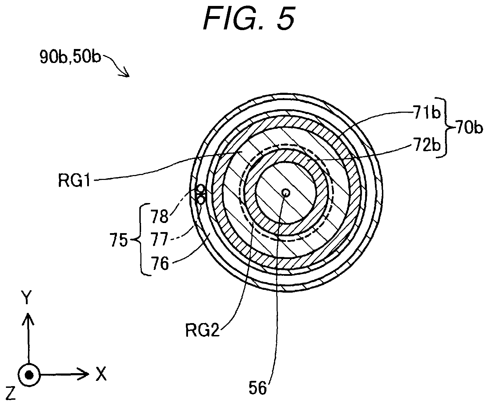

FIG. 5 is a cross-sectional view of a barrel 50b provided in a plasticizing device 90b in a second embodiment. In FIG. 5, in the same manner as the cross-sectional view of the barrel 50 of the first embodiment shown in FIG. 4, a communication hole 56, a heating portion 70b, a cooling portion 75, a first region RG1, and a second region RG2 are shown. Further, the plasticizing device 90b is included in a three-dimensional shaping apparatus 100 in the same manner as in the first embodiment. In the plasticizing device 90b, portions that are not particularly described are the same as those of the first embodiment.

The heating portion 70b has a first heating portion 71b and a second heating portion 72b. In this embodiment, the first heating portion 71b and the second heating portion 72b are both annularly disposed along a circumferential direction of a rotor 40. In this embodiment, specifically, the first heating portion 71b and the second heating portion 72b are aluminum nitride heaters formed in an annular shape. In another embodiment, the first heating portion 71b and the second heating portion 72b may be, for example, heaters using another ceramic such as silicon nitride, or may be heaters in which a heating wire is formed in an annular shape.

According also to the plasticizing device 90b of the second embodiment described above, the fluidity of the material in the first region RG1 is kept lower than the fluidity of the material in the second region RG2. In particular, in this embodiment, the first heating portion 71b and the second heating portion 72b are annularly disposed along the circumferential direction of the rotor 40. Therefore, the fluidity of the material in an outer circumferential portion of the barrel 50b can be kept low by simple control.

### C. Third Embodiment

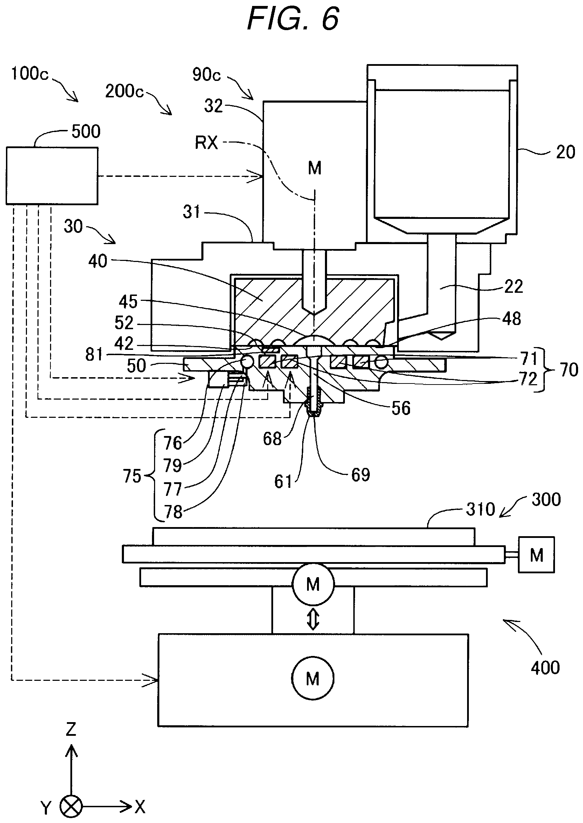

FIG. 6 is an explanatory view showing a schematic configuration of a three-dimensional shaping apparatus 100c in a third embodiment. A plasticizing device 90c included in a shaping unit 200c of the third embodiment includes a temperature measurement portion 81 unlike the first embodiment. In the plasticizing device 90c and the three-dimensional shaping apparatus 100c, portions that are not particularly described are the same as those of the first embodiment.

The temperature measurement portion 81 measures temperatures of a first region RG1 and a second region RG2. In this embodiment, the temperature measurement portion 81 has a thermocouple that measures the temperature of the first region RG1 and a thermocouple that measures the temperature of the second region RG2. In another embodiment, for example, the temperature measurement portion 81 may include a contactless sensor such as a radiation thermometer that measures the temperature of the first region RG1 and the temperature of the second region RG2.

In this embodiment, a control unit 500 controls a first heating portion 71 and a second heating portion 72 according to the temperatures measured by the temperature measurement portion 81. For example, when the temperature of the first region RG1 is higher than the glass transition temperature Tg of the material, the control unit 500 may decrease the output of the second heating portion 72, and when the temperature of the second region RG2 is lower than a target temperature, the control unit 500 may increase the output of the first heating portion 71. In that case, the target temperature can be determined as an arbitrary temperature exceeding the glass transition temperature Tg. In another case, a value to serve as a reference when the first heating portion 71 and the second heating portion 72 are controlled according to the measured temperatures may be predetermined from a temperature distribution or the like.

According also to the plasticizing device 90c of the third embodiment described above, the fluidity of the material in the first region RG1 is kept lower than the fluidity of the material in the second region RG2. In particular, in this embodiment, the temperatures of the first region RG1 and the second region RG2 can be more accurately adjusted according to the temperatures measured by the temperature measurement portion 81.

### D. Fourth Embodiment not according to the claimed invention

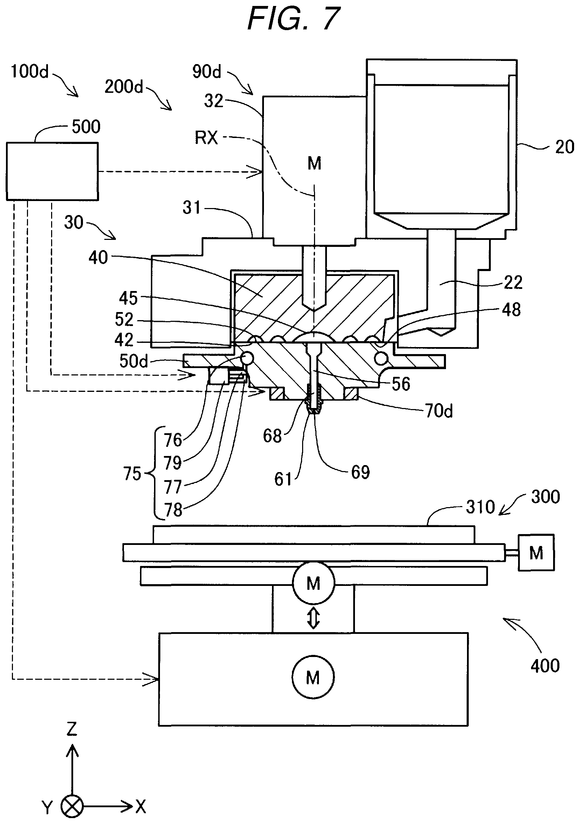

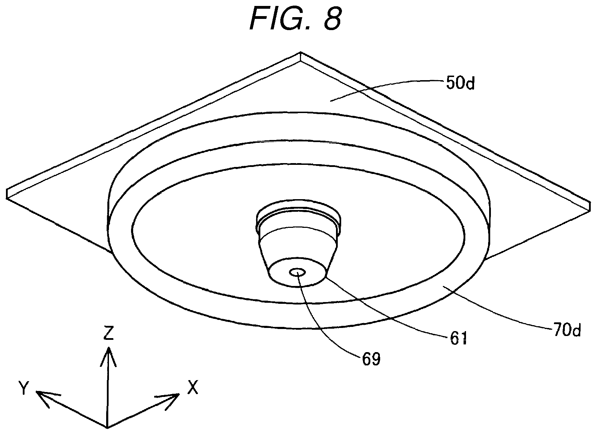

FIG. 7 is an explanatory view showing a schematic configuration of a three-dimensional shaping apparatus 100d in a fourth embodiment not according to the claimed invention. FIG. 8 is a schematic perspective view showing a configuration at a lower face side of a barrel 50d. As shown in FIGS. 7 and 8, a plasticizing device 90d of the fourth embodiment includes a heating portion 70d annularly disposed along a circumferential direction of a rotor 40. The heating portion 70d of this embodiment does not have the first heating portion 71 and the second heating portion 72 unlike the first embodiment.

The heating portion 70d is one aluminum nitride heater formed in an annular shape. In this embodiment, the heating portion 70d is disposed at a lower face of the barrel 50d so as to surround a nozzle 61. The heating portion 70d may be housed in a case, and for example, a lower face or an outer circumference of the heating portion 70d may be covered with an insulating material. In another embodiment not according to the claimed invention, the heating portion 70d may be embedded inside the barrel 50d. Further, the heating portion 70d may be, for example, a heater using another ceramic such as silicon nitride, or may be a heater in which a heating wire is formed in an annular shape.

Also in this embodiment, a control unit 500 controls the heating portion 70d so that a temperature of a second region RG2 is higher than a temperature of a first region RG1. Further, the control unit 500 controls the heating portion 70d, and also controls a refrigerant circulation device 79 so as to circulate a refrigerant in a refrigerant flow path 76 disposed in the barrel 50d. The refrigerant flow path 76 is disposed along a circumferential direction of the barrel 50d farther from a communication hole 56 than the heating portion 70d. That is, in this embodiment, the refrigerant flow path 76 along the circumferential direction of the barrel 50d is disposed between the heating portion 70d and an outer edge of a rotor opposed face 52 in the direction along the XY plane crossing the communication hole 56.

Also in this embodiment, as the material, an ABS resin formed into a pellet form is used. The control unit 500 controls the heating portion 70d so as to adjust the temperature of the first region RG1 to a temperature lower than the glass transition temperature Tg of the ABS resin that is the material and adjust the temperature of the second region RG2 to a temperature equal to or higher than the glass transition temperature Tg. Specifically, the glass transition temperature of the ABS resin material is 111°C, and the temperature of the heating portion 70d is controlled to 250°C. Further, the control unit 500 controls the refrigerant circulation device 79 so that the temperature of the refrigerant in each of an inlet portion 77 and an outlet portion 78 of the refrigerant flow path 76 is 15°C in the same manner as in the first embodiment.

According also to the plasticizing device 90d of this embodiment described above, the control unit 500 controls the heating portion 70d annularly disposed along the circumferential direction of the rotor 40 so that the temperature of the second region RG2 that is closer to the communication hole 56 than the first region RG1 is higher than the temperature of the first region RG1. According to this, the fluidity of the material in the first region RG1 is kept lower than the fluidity of the material in the second region RG2. Therefore, the feed-out amount of the shaping material to be fed out from the communication hole 56 can be stabilized.

Further, in this embodiment, the plasticizing device 90d has the refrigerant flow path 76, the inlet portion 77, and the outlet portion 78 provided along the circumferential direction of the barrel 50d farther from the communication hole 56 than the heating portion 70d. Therefore, by allowing the refrigerant to flow in the refrigerant flow path 76, the fluidity of the material can be kept lower in the outer circumferential portion of the barrel 50d.

Further, in this embodiment, the control unit 500 controls the heating portion 70d so as to adjust the temperature of the first region RG1 to a temperature lower than the glass transition temperature Tg of the ABS resin material that is an amorphous resin and adjust the temperature of the second region RG2 to a temperature equal to or higher than the glass transition temperature Tg. Therefore, when an amorphous resin is used as the material, the fluidity of the material in the first region RG1 can be more effectively kept low, and the fluidity of the material in the second region RG2 can be more effectively increased.

### E. Fifth Embodiment

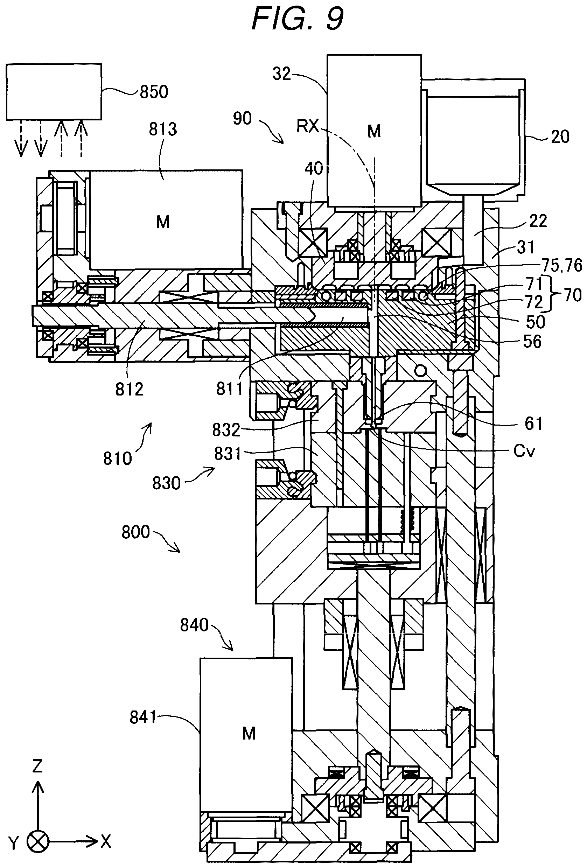

FIG. 9 is an explanatory view showing a schematic configuration of an injection molding apparatus 800 as a fifth embodiment of the present disclosure. The injection molding apparatus 800 of this embodiment includes a plasticizing device 90, a nozzle 61, an injection control mechanism 810, a mold portion 830, and a mold clamping device 840. The configuration of the plasticizing device 90 is the same as that in the first embodiment unless otherwise described.

As described in the first embodiment, the plasticizing device 90 has a rotor 40 and a barrel 50. To a communication hole 56 of the barrel 50 of this embodiment, the below-mentioned injection cylinder 811 is coupled. The plasticizing device 90 plasticizes at least a part of a material supplied to a groove 42 of the rotor 40 under the control of a control unit 850 to form a molten material in a paste form having fluidity, and guides the molten material to the injection control mechanism 810 from the communication hole 56.

The barrel 50 of this embodiment includes a first heating portion 71 and a second heating portion 72 in the same manner as in the first embodiment. Further, the barrel 50 of this embodiment includes a cooling portion 75 in the same manner as in the first embodiment. In FIG. 9, in order to facilitate the understanding of the configuration, illustration of the configuration other than a refrigerant flow path 76 in the cooling portion 75 is omitted.

The injection control mechanism 810 includes the injection cylinder 811, a plunger 812, and a plunger drive portion 813. The injection control mechanism 810 has a function of injecting the molten material in the injection cylinder 811 into the below-mentioned cavity Cv. The injection control mechanism 810 controls the injection amount of the molten material from the nozzle 61 under the control of the control unit 850. The injection cylinder 811 is a member in a substantially cylindrical shape coupled to the communication hole 56 of the barrel 50, and includes the plunger 812 therein. The plunger 812 slides inside the injection cylinder 811 and pressure-feeds the molten material in the injection cylinder 811 to the nozzle 61 coupled to the plasticizing device 90. The plunger 812 is driven by the plunger drive portion 813 constituted by a motor.

The mold portion 830 includes a movable mold 831 and a fixed mold 832. The movable mold 831 and the fixed mold 832 are provided so as to face each other, and the cavity Cv that is a space corresponding to the shape of a molded product is provided therebetween. Into the cavity Cv, the molten material is pressure-fed by the injection control mechanism 810 and injected through the nozzle 61.

The mold clamping device 840 includes a mold drive portion 841, and has a function of opening and closing the movable mold 831 and the fixed mold 832. The mold clamping device 840 opens and closes the mold portion 830 by driving the mold drive portion 841 so as to move the movable mold 831 under the control of the control unit 850.

The injection molding apparatus 800 of this embodiment described above includes the plasticizing device 90 having the same configuration as that in the first embodiment as described above. Therefore, the feed-out amount of the shaping material to be fed out from the communication hole 56 can be stabilized.

## Claims

1. A plasticizing device (90), comprising:
a drive motor (32);
a rotor (40) that is capable of being rotated by the drive motor (32) and has a lower groove formed face (48) with a groove (42) formed therein along the rotational direction of the rotor (40);
a barrel (50) that is opposed to the groove formed face (48) and has a communication hole (56);
a heating portion (70) that is capable of heating a material in a pellet form supplied between the groove (42) and the barrel (50); and
a control unit (500) that is capable of controlling the drive motor (32) and the heating portion (70) so as to plasticize the material supplied between the groove (42) and the barrel (50) and cause the material to flow along the groove (42) and out from the communication hole (56), wherein
the heating portion (70) has a first heating portion (71) and a second heating portion (72) disposed closer to the communication hole (56) than the first heating portion (71),
the barrel (50) has a first region (RG1) and a second region (RG2) that is closer to the communication hole (56) than the first region (RG1),
the control unit (500) is capable of individually controlling the first heating portion (71) and the second heating portion (72) so that a temperature of the second region (RG2) is higher than a temperature of the first region (RG1); and
**characterized in that**:
a refrigerant flow path (76) disposed along a circumferential direction of the barrel (50) farther from the communication hole (56) than the first heating portion;
an inlet portion (77) that communicates with the refrigerant flow path (76) and introduces a refrigerant inside the refrigerant flow path (76); and
an outlet portion (78) that communicates with the refrigerant flow path (76) and discharges the refrigerant outside the refrigerant flow path (78).

2. The plasticizing device according to claim 1, wherein the first heating portion (71) and the second heating portion (72) are provided in the barrel (50).

3. The plasticizing device according to claim 1, wherein
as the first heating portion (71), a pair of heating portions is disposed across the communication hole (56), and
as the second heating portion (72), a pair of heating portions is disposed across the communication hole (56).

4. The plasticizing device according to claim 1, wherein the first heating portion (71) and the second heating portion (72) are annularly disposed along a circumferential direction of the rotor (40).

5. The plasticizing device according to claim 1, further comprising a temperature measurement portion (81) that is capable of measuring temperatures of the first region (RG1) and the second region (RG2), wherein
the control unit (500) is capable of controlling the first heating portion (71) and the second heating portion (72) according to the temperatures measured by the temperature measurement portion (81).

6. The plasticizing device according to claim 1, wherein
the material is an amorphous resin, and the control unit (500) is capable of controlling the heating portion (70) so as to adjust the temperature of the first region (RG1) to a temperature lower than a glass transition temperature of the material and adjust the temperature of the second region to a temperature equal to or higher than the glass transition temperature.

## Patentansprüche

1. Plastifizierungsvorrichtung (90), umfassend:
einen Antriebsmotor (32);
einen Rotor (40), der durch den Antriebsmotor (32) gedreht werden kann und eine untere mit Rille versehene Fläche (48) aufweist, mit einer darin entlang der Drehrichtung des Rotors (40) gebildeten Rille (42);
einen Zylinder (50), der der mit Rille versehenen Fläche (48) gegenüberliegt und ein Verbindungsloch (56) aufweist;
einen Erhitzungsabschnitt (70), der ein Material in einer Pelletform erhitzen kann, das zwischen der Rille (42) und dem Zylinder (50) zugeleitet wird; und
eine Steuereinheit (500), die den Antriebsmotor (32) und den Erhitzungsabschnitt (70) steuern kann, um das Material, das zwischen der Rille (42) und dem Zylinder (50) zugeleitet wird, zu plastifizieren und das Material zu veranlassen, entlang der Rille (42) und aus dem Verbindungsloch (56) hinauszufließen, wobei
der Erhitzungsabschnitt (70) einen ersten Erhitzungsabschnitt (71) und einen zweiten Erhitzungsabschnitt (72), der näher bei dem Verbindungsloch (56) angeordnet ist als der erste Erhitzungsabschnitt (71), aufweist,
der Zylinder (50) eine erste Region (RG1) und eine zweite Region (RG2), die näher bei dem Verbindungsloch (56) liegt als die erste Region (RG1), aufweist,
die Steuereinheit (500) den ersten Erhitzungsabschnitt (71) und den zweiten Erhitzungsabschnitt (72) einzeln steuern kann, sodass eine Temperatur der zweiten Region (RG2) höher ist als eine Temperatur der ersten Region (RG1); und
**dadurch gekennzeichnet, dass**:
ein Kühlmittelströmungsweg (76) entlang einer Umfangsrichtung des Zylinders (50) weiter von dem Verbindungsloch (56) entfernt ist als der erste Erhitzungsabschnitt angeordnet ist;
ein Einlassabschnitt (77) mit dem Kühlmittelströmungsweg (76) in Verbindung steht und ein Kältemittel in das Innere des Kühlmittelströmungswegs (76) einleitet; und
ein Auslassabschnitt (78) mit dem Kühlmittelströmungsweg (76) in Verbindung steht und das Kältemittel von dem Kühlmittelströmungsweg (76) nach außen abgibt.

2. Plastifizierungsvorrichtung nach Anspruch 1, wobei der erste Erhitzungsabschnitt (71) und der zweite Erhitzungsabschnitt (72) in dem Zylinder (50) vorgesehen sind.

3. Plastifizierungsvorrichtung nach Anspruch 1, wobei
als der erste Erhitzungsabschnitt (71) ein Paar von Erhitzungsabschnitten gegenüberliegend neben dem Verbindungsloch (56) angeordnet ist und
als der zweite Erhitzungsabschnitt (72) ein Paar von Erhitzungsabschnitten gegenüberliegend neben dem Verbindungsloch (56) angeordnet ist.

4. Plastifizierungsvorrichtung nach Anspruch 1, wobei der erste Erhitzungsabschnitt (71) und der zweite Erhitzungsabschnitt (72) ringförmig entlang einer Umfangsrichtung des Rotors (40) angeordnet sind.

5. Plastifizierungsvorrichtung nach Anspruch 1, weiter umfassend einen Temperaturmessungsabschnitt (81), der Temperaturen der ersten Region (RG1) und der zweiten Region (RG2) messen kann, wobei
die Steuereinheit (500) den ersten Erhitzungsabschnitt (71) und den zweiten Erhitzungsabschnitt (72) gemäß den Temperaturen steuern kann, die von dem Temperaturmessungsabschnitt (81) gemessen werden.

6. Plastifizierungsvorrichtung nach Anspruch 1, wobei
das Material ein amorphes Harz ist und
die Steuereinheit (500) den Erhitzungsabschnitt (70) steuern kann, um die Temperatur der ersten Region (RG1) auf eine Temperatur einzustellen, die niedriger als eine Glasübergangstemperatur des Materials ist, und um die Temperatur der zweiten Region auf eine Temperatur einzustellen, die gleich oder höher als die Glasübergangstemperatur ist.

## Revendications

1. Dispositif de plastification (90) comprenant :
un moteur d'entraînement (32) ;
un rotor (40) qui peut être mis en rotation par le moteur d'entraînement (32) et qui a une face inférieure à rainure formée (48) avec une rainure (42) formée dans celle-ci le long de la direction de rotation du rotor (40) ;
un cylindre (50) opposé à la face à rainure formée (48) et qui a un trou de communication (56) ;
une partie de chauffage (70) capable de chauffer un matériau sous forme de granules fourni entre la rainure (42) et le cylindre (50) ; et
une unité de commande (500) qui est capable de contrôler le moteur d'entraînement (32) et la partie de chauffage (70) de manière à plastifier le matériau fourni entre la rainure (42) et le cylindre (50) et de faire en sorte que le matériau s'écoule le long de la rainure (42) et hors du trou de communication (56), dans lequel
la partie de chauffage (70) a une première partie de chauffage (71) et une deuxième partie de chauffage (72) disposée plus près du trou de communication (56) que la première partie de chauffage (71),
le cylindre (50) a une première zone (RG1) et une deuxième zone (RG2) plus proche du trou de communication (56) que la première zone (RG1),
l'unité de commande (500) est capable de contrôler individuellement la première partie de chauffage (71) et la deuxième partie de chauffage (72) de sorte qu'une température de la deuxième zone (RG2) est plus élevée qu'une température de la première zone (RG1) ; et
**caractérisé par** :
un chemin d'écoulement de réfrigérant (76) disposé le long d'une direction circonférentielle du cylindre (50) plus loin du trou de communication (56) que la première partie de chauffage ;
une partie d'entrée (77) qui communique avec le chemin d'écoulement de réfrigérant (76) et introduit un réfrigérant à l'intérieur du chemin d'écoulement de réfrigérant (76) ; et
une partie de sortie (78) qui communique avec le chemin d'écoulement de réfrigérant (76) et décharge le réfrigérant à l'extérieur du chemin d'écoulement de réfrigérant (76).

2. Dispositif de plastification selon la revendication 1, dans lequel la première partie de chauffage (71) et la deuxième partie de chauffage (72) sont fournies dans le cylindre (50).

3. Dispositif de plastification selon la revendication 1, dans lequel
en tant que la première partie de chauffage (71), une paire de parties de chauffage est disposée de part et d'autre du trou de communication (56), et
en tant que la deuxième partie de chauffage (72), une paire de parties de chauffage est disposée de part et d'autre du trou de communication (56).

4. Dispositif de plastification selon la revendication 1, dans lequel la première partie de chauffage (71) et la deuxième partie de chauffage (72) sont disposées de manière annulaire le long d'une direction circonférentielle du rotor (40).

5. Dispositif de plastification selon la revendication 1, comprenant en outre une partie de mesure de température (81) capable de mesurer des températures de la première zone (RG1) et la deuxième zone (RG2), dans lequel
l'unité de commande (500) est capable de contrôler la première partie de chauffage (71) et la deuxième partie de chauffage (72) en fonction des températures mesurées par la partie de mesure de température (81).

6. Dispositif de plastification selon la revendication 1, dans lequel
le matériau est une résine amorphe, et
l'unité de commande (500) est capable de contrôler la partie de chauffage (70) de manière à régler la température de la première région (RG1) à une température inférieure à une température de transition vitreuse du matériau et régler la température de la deuxième zone à une température supérieure ou égale à la température de transition vitreuse.
